# EUROPÄISCHE PATENTSCHRIFT

(11) **EP 3 572 532 B1**
(45) Veröffentlichungstag und Bekanntmachung des Hinweises auf die Patenterteilung: **31.08.2022**
(21) Anmeldenummer: 19171140.7
(22) Anmeldetag: 25.04.2019
(51) Int. Cl.: C21B 13/14, C21C 5/28, C21C 5/56, F27B 19/04, C21C 5/52

(54) **EINBINDUNG EINES SCHROTTSCHMELZOFENS IN EIN KONVERTERSTAHLWERK**
INCORPORATION OF A SCRAP MELTING FURNACE INTO A CONVERTER STEELWORKS
INTÉGRATION D'UN FOUR DE FUSION DE FERRAILLE DANS UNE ACIÉRIE À CONVERTISSEUR

(30) Priorität: 25.05.2018 DE 102018208305
(43) Veröffentlichungstag der Anmeldung: 27.11.2019
(73) Patentinhaber: SMS Group GmbH, 40237 Düsseldorf (DE)
(72) Erfinder: Schüring, Andreas, 45475 Mülheim (DE); Voj, Lukas Peter, 50858 Köln (DE); Grimm, Stephan, 45481 Mühlheim an der Ruhr (DE)
(74) Vertreter: Klüppel, Walter

(56) Entgegenhaltungen:
- DE-A1-102012 009 217
- GUTHRIE R I L ET AL: "THE DESIGN OF CONTINUOUS CASTING PROCESSES FOR STEEL", 1. Januar 2004 (2004-01-01), HANDBOOK OF METALLURGICAL PROCESS DESIGN, MARCEL DEKKER INC, PAGE(S) 251 - 293, XP002586066, ISBN: 978-0-8247-4106-8 * Abbildung 1 *
- LEMKE S ET AL: "TAILORED SOLUTIONS FOR THE PRODUCTION OF QUALITY STEEL", MPT. METALLURGICAL PLANT AND PLANT AND TECHNOLOGY INTERNATIONAL, VERLAG STAHLEISEN, DUESSELDORF, DE, Bd. 24, Nr. 4, 1. August 2001 (2001-08-01) , Seite 72, XP009010639, ISSN: 0935-7254

## Beschreibung

Die Erfindung richtet sich auf ein Hüttenwerk umfassend eine Roheisen-Erzeugungsvorrichtung zum Erschmelzen einer Roheisenschmelze aus einem Erz oder aus einem zu einem Eisenoxid reduzierten Erz oder einem eisenhaltigen Rohstoff, einen in einem Stahlwerk angeordneten Konverter zur Stahlerzeugung aus der Roheisenschmelze und eine außerhalb des Stahlwerks angeordnete Primär-Energie-Schrottschmelzvorrichtung zum Einschmelzen von Schrott sowie eine die in der Roheisen-Erzeugungsvorrichtung erzeugte Roheisenschmelze auf einem Roheisen-Stahl-Fahrweg zum Konverter transportierende Transportvorrichtung. Hüttenwerke mit Roheisenerschmelzung, Primär-Energie-Schrottschmelzvorrichtung und Konverter sind aus GUTHRIE R I L ET AL: "THE DESIGN OF CONTINUOUS CASTING PROCESSES FOR STEEL", 1. Januar 2004, HANDBOOK OF METALLURGICAL PROCESS DESIGN, MARCEL DEKKER INC, Seiten 251 - 293 bekannt.

Primär-Energie-Schrottschmelzvorrichtungen sind aus der EP 2 844 939 B1 in der Kombination als Niederschacht-Lichtbogenofen-System und aus der WO 2013/163983 A1 als Schrottschmelzofen-Pfannenofen-System bekannt. Bei beiden Systemen wird metallischer Schrott oder ein metallischer Rohstoff, beispielsweise Eisenschwamm, mit Hilfe von Primärenergie eingeschmolzen.

Werden derartige Primär-Energie-Schrottschmelzvorrichtungen in einen Konverter zur Stahlerzeugung aufweisende integrierte Hüttenwerk integriert, lässt sich der Schrotteinsatz zur Erzeugung von flüssigem Stahl steigern. Hierbei liegen die für ein solches Einschmelz-Aggregat notwendigen Investitionskosten deutlich unter denen sonst für eine Steigerung der Flüssigstahl-Eisenproduktion in einem bestehenden Werk erforderlichen Kosten. Ein weiterer Vorteil der Verwendung eines erhöhten Stahlschrottanteils besteht in einer Verbesserung der CO₂-Bilanz für das in einer Primär-Energie-Schrottschmelzvorrichtung erschmolzene Metall. Je nach Anwendungszweck und vorgesehener Verfahrensroute kann der in einer Primär-Energie-Schrottschmelzvorrichtung erzeugte "flüssige Schrott" sowohl dem in dem jeweiligen integrierten Hüttenwerk erzeugten Roheisen beigemengt werden als auch separat zur Erzeugung von Stahl aus der erzeugten Schrottschmelze Verwendung finden.

Der Erfindung liegt die Aufgabe zugrunde, eine Lösung zu schaffen, die die Integration einer Primär-Energie-Schrottschmelzvorrichtung in ein integriertes Hüttenwerk unter Aufrechterhaltung flexibler Produktionsmöglichkeiten für die Roheisen- und Stahlerzeugung ermöglicht.

Bei einem Hüttenwerk der eingangs näher bezeichneten Art wird diese Aufgabe erfindungsgemäß dadurch gelöst, dass die Primär-Energie-Schrottschmelzvorrichtung derart ins Hüttenwerk und in den von der Transportvorrichtung auf dem Weg von der Roheisen-Erzeugungsvorrichtung zur Überführung der Roheisenschmelze zum Konverter befahrenen oder befahrbaren Roheisen-Stahl-Fahrweg eingebunden ist sowie der Roheisen-Stahl-Fahrweg derart eingerichtet ist, dass die Transportvorrichtung wahlweise sowohl unbefüllt oder mit Roheisen aus der Roheisen-Erzeugungsvorrichtung befüllt der Primär-Energie-Schrottschmelzvorrichtung zuführbar als auch an dieser vorbei oder von dieser ausgehend dem Konverter zuführbar ist, wobei die der Primär-Energie-Schrottschmelzvorrichtung zugeführte Transportvorrichtung dort mit einer in der Primär-Energie-Schrottschmelzvorrichtung aus erschmolzenem Schrott erzeugten Schrottschmelze befüllbar ist.

Vorteilhafte Ausgestaltungen und zweckmäßige Weiterbildungen der Erfindung sind Gegenstand der abhängigen Unteransprüche 2-4.

Erfindungsgemäß wird demnach die Primär-Energie-Schrottschmelzvorrichtung separat von dem den Konverter aufweisenden Stahlwerk angeordnet, dabei aber in den Aufbau und die Logistik des bestehenden Stahlwerkes eingebunden. Das wesentliche Verbindungsglied ist hierbei die in integrierten Hüttenwerken üblicherweise vorhandene Transportvorrichtung, hier in Ausgestaltung der Erfindung insbesondere ein auf Schienen verfahrbarer Torpedopfannenwagen, der üblicherweise das flüssige Roheisen von einer Roheisen-Erzeugungsvorrichtung, insbesondere einem Hochofen, zum Stahlwerk transportiert. In der Roheisen-Transportlogistik ist nun auf dem Roheisen-Stahl-Fahrweg zwischen der Roheisen-Erzeugungsvorrichtung, dem Hochofen und dem Konverter bzw. dem Stahlwerk die Primär-Energie-Schrottschmelzvorrichtung als kompakte Einheit vorzugsweise derart eingebunden, dass der Stahlwerksbetrieb selbst bei der Montage und einer Wartung der Primär-Energie-Schrottschmelzvorrichtung nicht beeinträchtigt ist.

Eine Primär-Energie-Schrottschmelzvorrichtung weist einen Bereich auf, in welchem die metallischen Einsatzstoffe, insbesondere Schrott und Eisenschwamm oder Eisenschwammbrikett, z.B. mittels eine Lastkraftwagens oder eines schienengebundenen Fahrzeugs, angeliefert werden. Anschließend werden die metallischen Einsatzstoffe von einer unteren Chargierebene, in welche der jeweilige Lkw oder das jeweilige schienengebundene Fahrzeug entlädt, durch ein Kran- oder Skip-System zu einer oberen Chargierebene gefördert, von wo aus die metallischen Einsatzstoffe über eine Materialschleuse in ein Primär-Energie-Schrottschmelzgefäß gefördert werden.

Ein derartiges Primär-Energie-Schrottschmelzgefäß kann in vorteilhafter Weise als ein mittels Brennstoff befeuerter Brenner beheizter Schachtofen ausgebildet sein, was die Erfindung in Weiterbildung vorsieht.

In dem Primär-Energie-Schrottschmelzgefäß wird der Schrott zu einer Schrottschmelze erschmolzen und tritt dann am unteren Ende des Primär-Energie-Schrottschmelzgefäßes in ein Zwischengefäß mit Heizeinrichtung aus. Die Erfindung zeichnet sich in Ausgestaltung diesbezüglich dadurch aus, dass die Primär-Energie-Schrottschmelzvorrichtung ausgangsseitig des Schachtofens ein die im Schachtofen aus erschmolzenem Schrott erzeugte Schrottschmelze aufnehmendes Zwischengefäß mit Heizeinrichtung aufweist. In dem Zwischengefäß, das bei Bedarf zu einer Temperaturerhöhung der Schrottschmelze genutzt werden kann, wird die Schrottschmelze, d.h. der "flüssige Schrott", bevorratet. Für die Durchführung einer Temperaturerhöhung weist das Zwischengefäß eine Heizeinrichtung auf. Diese Heizeinrichtung kann Brenner oder induktive Heizeinrichtungen oder mittels elektrischen Stroms betriebene Heizeinrichtungen, wie Lichtbogenerzeugungseinrichtungen oder Widerstandserwärmungseinrichtungen umfassen. Aber auch mittels chemischer Mittel, beispielsweise durch die Zugabe von Legierungsmitteln, die eine exotherme Reaktion der Schrottschmelze bewirken, kann eine Temperaturerhöhung erfolgen.

Im Ausgießbereich des Primär-Energie-Schrottschmelzgefäßes kann ein weiterer Brenner angeordnet und ausgebildet sein, der den Schrottschmelzprozess unterstützt und die Ausgussrinne freihält.

Mittels des Zwischengefäßes ist es möglich, die Primär-Energie-Schrottschmelzvorrichtung kontinuierlich zu betreiben und die darin erzeugte Schrottschmelze dann aber diskontinuierlich in die Transportvorrichtung, d.h. in einen Torpedopfannenwagen, zu entleeren. Das Zwischengefäß kann neben der Temperaturerhöhung und der Bevorratung von "flüssigem Schrott" (Schrottschmelze) auch für die Durchführung metallurgisch notwendiger oder gewünschter Arbeiten genutzt werden.

Die Erfindung ist nachstehend anhand einer Zeichnung beispielhaft näher erläutert.

Diese zeigt in
- Fig. 1: in Aufsicht schematisch ein Hüttenwerk mit Roheisen-Erzeugungsvorrichtung, einer Primär-Energie-Schrottschmelzvorrichtung und einem Stahlwerk mit Konverter und in

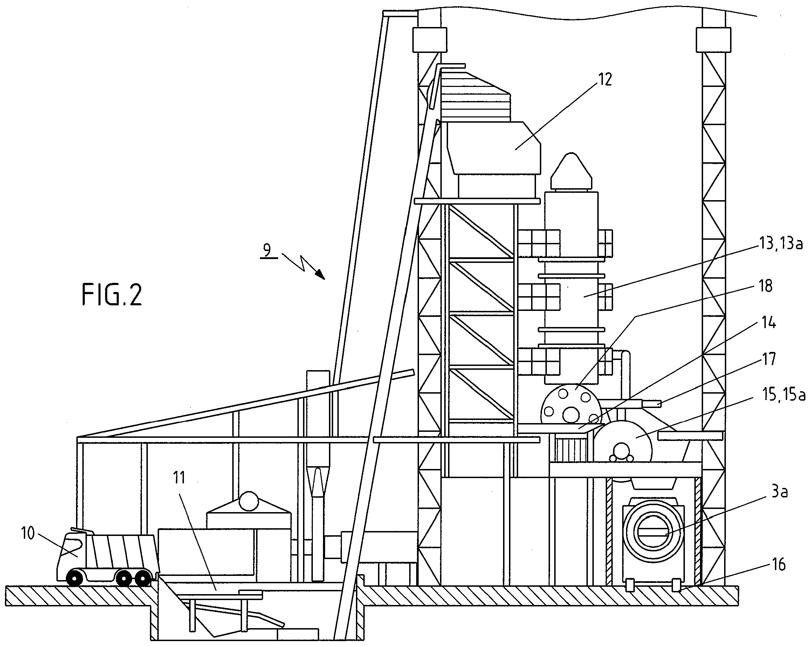

- Fig. 2: in Seitenansicht in schematischer Darstellung eine Primär-Energie-Schrottschmelzvorrichtung.

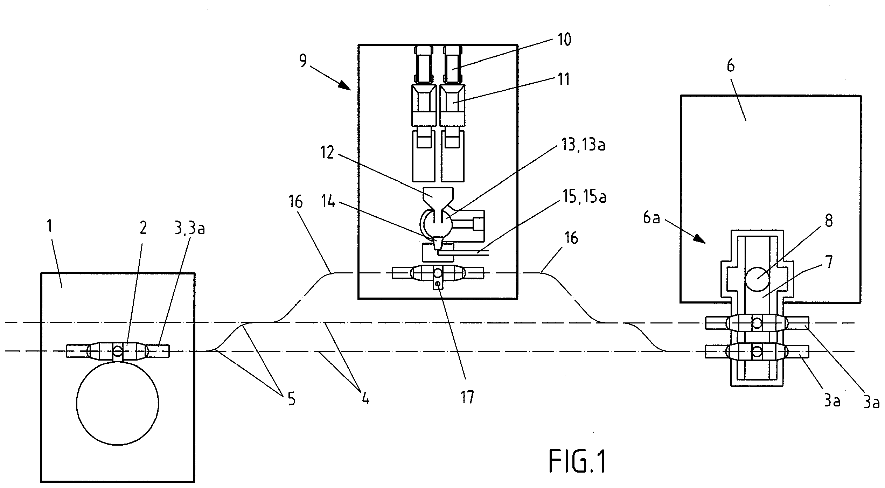

In einer Roheisen-Erzeugungsvorrichtung 1, hier beispielhaft ein Hochofen, wird eine Roheisenschmelze mit Hilfe einer Befüllvorrichtung 2 in eine Transportvorrichtung 3, hier ein auf Scheinen verfahrbarer Torpedopfannenwagen 3a, chargiert. Über ein Schienensystem 4, in welchem den jeweils gewünschten Roheisen-Stahl-Fahrweg ermöglichende Weichen 5 ausgebildet sind, kann ein Torpedopfannenwagen 3a wahlweise direkt einem Stahlwerksbereich 6 mit Konverter 6a sowie einer Umfüllgrube 7 zugeführt werden. Der nicht vollständig mit einer Roheisenschmelze befüllte Torpedopfannenwagen 3a wird dann in den in der Fig. 1 dargestellten Bereich des Stahlwerks 6 längs des Schienensystems 4 verfahren, wo das Roheisen aus dem Torpedopfannenwagen 3a in eine Roheisenpfanne 8 umgefüllt werden kann.

Alternativ ist ein Torpedopfannenwagen 3a aber auch bei entsprechender Stellung der Weichen 5 über ein Schienensystem oder einen Gleisweg 16 der außerhalb des Stahlwerks 6 angeordneten Primär-Energie-Schrottschmelzvorrichtung 9 zuführbar. Aufgrund dieser alternativen Roheisen-Stahl-Fahrwege ist sichergestellt, dass auch Störungen oder Wartungsarbeiten an der Primär-Energie-Schrottschmelzvorrichtung 9 zu keiner Beeinträchtigung des Produktionsbetriebs des Konverters 6a im Stahlwerk 6 führen. Der bevorzugte und erfindungsgemäß übliche Roheisen-Stahl-Fahrweg führt einen Torpedopfannenwagen 3a nach dem Chargieren mit einer Roheisenschmelze über die Befüllvorrichtung 2 in den Bereich der Primär-Energie-Schrottschmelzvorrichtung 9. Hier wird der metallische Einsatzstoff oder das Einsatzmaterial, bei dem es sich vorzugsweise um Schrott, aber auch um Eisenschwamm oder Eisenschwammbriketts oder reduziertes Eisenerz handeln kann, mittels Lkw oder schienengebundener Fahrzeuge oder einer anderen im Stahlwerk gebräuchlichen Transporteinrichtung 10 angeliefert. In einem ersten Schritt werden diese Stoffe in einer unteren Chargierebene 11 der Primär-Energie-Schrottschmelzvorrichtung 9 bevorratet, bevor sie dann über ein Kran- oder Aufzugsystem einer oberen Chargierebene 12 zugeführt werden. Von der oberen Chargierebene 12 aus wird das Einsatzmaterial über eine Materialschleuse in ein als Schachtofen 13a ausgebildetes Primär-Energie-Schrottschmelzgefäß 13 chargiert. Um eine möglichst gute Energieauswertung zu erreichen, sollte das Primär-Energie-Schrottschmelzgefäß 13 immer einen möglichst konstanten Füllgrad aufweisen. Durch eine im Inneren des Primär-Energie-Schrottschmelzgefäßes 13 angeordnete hohe Schrottsäule wird sichergestellt, dass die von Brennstoff verfeuernden, im unteren Bereich des Schachtofens 13a ausgebildeten Brennern 18 aufsteigenden heißen Prozessgase (Rauchgas) ihren Energieinhalt an den metallischen Einsatzstoff, d.h. den Schrott der Schrottsäule, übergeben und somit ausreichend vorgewärmter metallischer Einsatzstoff in den die Brenner 18 aufweisenden Brennerbereich des Primär-Energie-Schrottschmelzgefäßes 13, bzw. des Schachtofens 13a, gelangt. Im Bereich der Brenner 18 wird der metallische Einsatzstoff, d.h. der Schrott, zu einer Schrottschmelze erschmolzen, die kontinuierlich an der tiefsten Stelle des Primär-Energie-Schrottschmelzgefäßes 13 über eine Ausgussrinne 14 in ein bewegliches Zwischengefäß 15 ausfließt. Um den Einschmelzprozess des Schrotts im Primär-Energie-Schrottschmelzgefäß 13 zu unterstützen und um die Ausgussrinne 14 freizuhalten, ist im Bereich der Ausgussrinne 14 ein bewegliches Brennersystem 17 angeordnet. Der kontinuierlich aus dem Brenner-Energie-Schrottschmelzgefäß abfließende "flüssige Schrott" kann durch das Zwischengefäß 15 diskontinuierlich in den auf dem der Primär-Energie-Schrottschmelzvorrichtung 9 zugeordneten Gleisweg 16 stehenden Torpedopfannenwagen 3a chargiert werden. Das Zwischengefäß 15 ist mit einer Heizeinrichtung 15a ausgestattet, die es ermöglicht, anderenfalls etwaige auftretende Temperaturverluste in dem Zwischengefäß 15 zu kompensieren. Bei der Heizeinrichtung 15a kann es sich wahlweise um eine induktive Heizvorrichtung, eine sonstwie mit elektrischem Strom betriebene Heizeinrichtung, beispielsweise eine Lichtbogen- oder Widerstandserwärmung, aber auch um Brenner handeln. Ebenso ist es möglich, den Temperaturverlust chemisch durch die Zugabe von Legierungsmaterial zu der Schrottschmelze, das in der Schrottschmelze eine exotherme Reaktion hervorruft, zu erreichen. Auch ist es möglich, in dem Zwischengefäß 15 gewünschte metallurgische Prozesse durchzuführen. Um im Zwischengefäß 15 entstehende Schlacken von dem "flüssigen Schrott" (Schrottschmelze) zu trennen, ist eine Schlackenabführrinne vorgesehen, die es ermöglicht, die Schlacke über eine entsprechende Öffnung des Primär-Energie-Schrottschmelzgefäßes 13 abzuziehen, bevor die Schrottschmelze, d.h. der "flüssige Schrott", dem oder einem Torpedopfannenwagen 3a zugeführt wird. In dem Zwischengefäß 15 kann die Schrottschmelze derart behandelt werden, dass gegebenenfalls entstandenes Eisenoxid (FeO) für den Prozess zurückgewonnen wird und die Schrottschmelze beim Umfüllen in einen bereits mit einer Roheisenschmelze aus der Roheisenerzeugungsvorrichtung 1 befüllten Torpedopfannenwagen 3a nicht zu heftig reagiert. Die Abstichgeschwindigkeit aus dem Zwischengefäß 15 in einen Torpedopfannenwagen 3a kann hierbei entsprechend angepasst werden. Auch während des Abstichs von Schrottschmelze aus dem Zwischengefäß 15 in den Torpedopfannenwagen 3a wird vom Zwischengefäß 15 weiterhin kontinuierlich zufließende Schrottschmelze aus dem Primär-Energie-Schrottschmelzgefäß 13 aufgenommen.

Der Torpedopfannenwagen 3a befindet sich im Bereich der Primär-Energie-Schrottschmelzvorrichtung 9 auf einem Parallelschienensystem 16, das parallel zum Schienensystem 4 zwischen der Roheisen-Erzeugungsvorrichtung 1 und dem Stahlwerk 6 mit Konverter 6a ausgebildet ist. In analoger Weise kann die erfindungsgemäße Primär-Energie-Schrottschmelzvorrichtung 9 auch in anderen Stahlwerken angeordnet sein, bei welchen Roheisen oder anderes flüssiges Metall in einem Fahrzeug einer Weiterverarbeitung zugeführt wird.

Die Primär-Energie-Schrottschmelzvorrichtung 9 ist von ihrer Anordnung und logistisch unabhängig von der Erschmelzung des Roheisens in einer Roheisen-Erzeugungsvorrichtung 1 und dessen nachfolgender Weiterverarbeitung in einem Stahlwerksbereich 6 angeordnet. Die Nachrüstung eines bestehenden integrierten Hüttenwerkes mit der Primär-Energie-Schrottschmelzvorrichtung 9 führt zu keinen negativen Einflüssen innerhalb einer bestehenden Logistik, beispielsweise bezüglich des Kranspiels oder von Behandlungszeiten. Beim Nachrüsten bestehender Hüttenwerke mit einer Primär-Energie-Schrottschmelzvorrichtung 9 wird kein großer zusätzlicher Platzbedarf für neue Anlagenteile benötigt. Der Bereich für die Primär-Energie-Schrottschmelzvorrichtung 9 muss lediglich logistisch zwischen der Roheisen-Erzeugungsvorrichtung 1 und dem Konverter 6a des Stahlwerksbereiches 6 angeordnet werden. Die Primär-Energie-Schrottschmelzvorrichtung 9 ist derart angeordnet, dass es bei einer Störung oder Wartung der Primär-Energie-Schrottschmelzvorrichtung 9 zu keiner Einflussnahme auf den Betrieb der Roheisen-Erzeugungsvorrichtung 1 und/oder des Konverters 6a des Stahlwerksbereiches 6 kommt.

Die Anlieferung metallischer Einsatzstoffe für die Primär-Energie-Schrottschmelzvorrichtung 9 ist ebenfalls unabhängig von der bestehenden Logistik und bestehenden Einrichtung des vorhandenen integrierten Hüttenwerks. Durch die Ausbildung einer unteren Chargierebene 11 und einer oberen Chargierebene 12 wird eine Entkoppelung der Anlieferung des metallischen Einsatzstoffes und der konstanten Füllhöhe im Primär-Energie-Schrottschmelzgefäß 13 erreicht. Dies führt zu einer bestmöglichen Vorwärmung und Energieausnutzung im Primär-Energie-Schrottschmelzgefäß 13.

Das Zwischengefäß 15 ist zudem derart dimensioniert, dass Störungen bei der Bereitstellung von Torpedopfannenwagen 3a derart kompensiert werden können, dass die kontinuierliche Zufuhr von Schrottschmelze aus dem Primär-Energie-Schrottschmelzgefäß 13 nicht unterbrochen werden muss.

### Bezugszeichenliste

- 1: Roheisen-Erzeugungsvorrichtung
- 2: Befüllvorrichtung
- 3: Transportvorrichtung
- 3a: Torpedopfannenwagen
- 4: Schienensystem
- 5: Weichen
- 6: Stahlwerksbereich
- 6a: Konverter
- 7: Umfüllgrube
- 8: Roheisenpfanne
- 9: Primär-Energie-Schrottschmelzvorrichtung
- 10: Transporteinrichtung
- 11: untere Chargierebene
- 12: obere Chragierebene
- 13: Primär-Energie-Schrottschmelzgefäß
- 13a: Schachtofen
- 14: Ausgussrinne
- 15: Zwischengefäß
- 15a: Heizeinrichtung
- 16: Gleisweg
- 17: bewegliches Brennersystem
- 18: Brenner

## Patentansprüche

1. Hüttenwerk umfassend eine Roheisen-Erzeugungsvorrichtung (1) zum Erschmelzen einer Roheisenschmelze aus einem Erz oder aus einem zu einem Eisenoxid reduzierten Erz oder einem eisenhaltigen Rohstoff, einen in einem Stahlwerk (6) angeordneten Konverter (6a) zur Stahlerzeugung aus der Roheisenschmelze und eine außerhalb des Stahlwerks (6) angeordnete Primär-Energie-Schrottschmelzvorrichtung (9) zum Einschmelzen von Schrott sowie eine die in der Roheisen-Erzeugungsvorrichtung (1) erzeugte Roheisenschmelze auf einem Roheisen-Stahl-Fahrweg zum Konverter (6a) transportierende Transportvorrichtung (3),
**dadurch gekennzeichnet,**
**dass** die Primär-Energie-Schrottschmelzvorrichtung (9) derart ins Hüttenwerk und in den von der Transportvorrichtung (3) auf dem Weg von der Roheisen-Erzeugungsvorrichtung (1) zur Überführung der Roheisenschmelze zum Konverter (6a) befahrenen oder befahrbaren Roheisen-Stahl-Fahrweg eingebunden ist sowie der Roheisen-Stahl-Fahrweg derart eingerichtet ist, dass die Transportvorrichtung (3) wahlweise sowohl unbefüllt oder mit Roheisen aus der Roheisen-Erzeugungsvorrichtung (1) befüllt der Primär-Energie-Schrottschmelzvorrichtung (9) zuführbar als auch an dieser vorbei oder von dieser ausgehend dem Konverter (6a) zuführbar ist, wobei die der Primär-Energie-Schrottschmelzvorrichtung (9) zugeführte Transportvorrichtung (3) dort mit einer in der Primär-Energie-Schrottschmelzvorrichtung (9) aus erschmolzenem Schrott erzeugten Schrottschmelze befüllbar ist.

2. Hüttenwerk nach Anspruch 1, **dadurch gekennzeichnet, dass** die Transportvorrichtung (3) ein auf Schienen verfahrbarer Torpedopfannenwagen (3a) und der Roheisen-Stahl-Fahrweg eine Gleisstrecke (4,16) ist.

3. Hüttenwerk nach Anspruch 1 oder 2, **dadurch gekennzeichnet, dass** die Primär-Energie-Schrottschmelzvorrichtung (9) einen mittels brennstoffbefeuerter Brenner (18) beheizten Schachtofen (13a) als Primär-Energie-Schrottschmelzgefäß (13) aufweist.

4. Hüttenwerk nach einem der vorhergehenden Ansprüche, **dadurch gekennzeichnet, dass** die Primär-Energie-Schrottschmelzvorrichtung (9) ausgangsseitig des Schachtofens (13a) ein die im Schachtofen (13a) aus erschmolzenem Schrott erzeugte Schrottschmelze aufnehmendes Zwischengefäß (15) mit Heizeinrichtung (15a) aufweist.

## Claims

1. Steelworks comprising a pig iron producing device (1) for smelting a pig iron smelt from an ore or an ore reduced to an iron oxide or from a raw material with iron content, a converter (6a), which is arranged in the steelworks (6), for steel production from the pig iron smelt and a primary energy scrap melting device (9), which is arranged outside the steelworks (6), for melting down scrap as well as a transport device (3) for transporting the pig iron smelt, which is produced in the pig iron producing device (1), on a pig iron and steel travel path to the converter (6a),
**characterised in that**
the primary energy scrap melting device (9) is incorporated in such a way in the steelworks and in the pig iron and steel travel path, which is or can be travelled on by the transport device (3) on the way from the pig iron producing device (1) for transfer of the pig iron smelt to the converter (6a), and the pig iron and steel travel path is arranged in such a way that the transport device (3) can be selectably led not only unfilled or filled with pig iron from the pig iron producing device (1) to the primary energy scrap melting device (9), but also past this or starting from this to the converter (6a), wherein the transport device (3) led to the primary energy scrap melting device (9) can be filled thereat with a scrap melt produced in the primary energy scrap melting device (9) from molten scrap.

2. Steelworks according to claim 1, **characterised in that** the transport device (3) is a torpedo ladle car (3a) movable on rails and the pig iron and steel travel path is a rail track (4, 16).

3. Steelworks according to claim 1 or 2, **characterised in that** the primary energy scrap melting device (9) comprises a shaft furnace (13a), which is heated by means of a coal-fired burner (18), as primary energy scrap melting vessel (13).

4. Steelworks according to any one of the preceding claims, **characterised in that** the primary energy scrap melting device (9) comprises at the outlet side of the shaft furnace (13a) a surge vessel (15), which receives the scrap melt produced in the shaft furnace (13a) from molten scrap, with heating equipment (15a).

## Revendications

1. Usine sidérurgique comprenant un dispositif de production de fonte brute (1) pour faire fondre une fonte brute à partir d'un minerai ou d'un minerai réduit en un oxyde de fer ou d'une matière première contenant du fer, un convertisseur (6a) disposé dans une aciérie (6) pour la production d'acier à partir de la fonte en fusion et un dispositif de fusion de ferraille à énergie primaire (9) disposé à l'extérieur de l'aciérie (6) pour la fusion de ferraille, ainsi qu'un dispositif de transport (3) destiné à transporter la fonte en fusion produite dans le dispositif de production de fonte brute (1) vers le convertisseur (6a) sur une voie de circulation fonte-acier,
**caractérisé en ce que**
le dispositif de fusion de ferraille à énergie primaire (9) est intégré dans la voie de circulation de la fonte et de l'acier empruntée ou pouvant être empruntée par le dispositif de transport (3) sur le trajet allant du dispositif de production de fonte brute (1) pour le transfert de la fonte brute fondue vers le convertisseur (6a), et la voie de circulation de la fonte et de l'acier est aménagée de telle sorte que le dispositif de transport (3) peut être amené au choix aussi bien à vide ou rempli de fonte brute provenant du dispositif de production de fonte brute (1) au dispositif de fusion de ferraille à énergie primaire (9) que passer devant celui-ci ou être amené à partir de celui-ci au convertisseur (6a), le dispositif de transport (3) amené au dispositif de fusion de ferraille à énergie primaire (9) pouvant y être rempli d'une masse de ferraille fondue produite dans le dispositif de fusion de ferraille à énergie primaire (9) à partir de ferraille fondue.

2. Usine sidérurgique selon la revendication 1, **caractérisée en ce que** le dispositif de transport (3) est un wagon-torpille (3a) pouvant se déplacer sur des rails et **en ce que** la voie de circulation fonte-acier est une voie ferrée (4, 16).

3. Usine sidérurgique selon la revendication 1 ou 2, **caractérisée en ce que** le dispositif de fusion de ferraille à énergie primaire (9) comporte un four à cuve (13a) chauffé au moyen de brûleurs (18) alimentés en combustible comme récipient de fusion de ferraille à énergie primaire (13).

4. Usine sidérurgique selon l'une des revendications précédentes, **caractérisée en ce que** le dispositif de fusion de ferraille à énergie primaire (9) présente, du côté sortie du four à cuve (13a), un récipient intermédiaire (15) avec un dispositif de chauffage (15a) destiné à recevoir la ferraille fondue produite dans le four à cuve (13a) à partir de ferraille fondue.
